# EUROPÄISCHE PATENTSCHRIFT

(11) **EP 0 543 825 B1**
(45) Veröffentlichungstag und Bekanntmachung des Hinweises auf die Patenterteilung: **24.08.1994**
(21) Anmeldenummer: 91911445.4
(22) Anmeldetag: 03.06.1991
(51) Int. Cl.: G06F 11/16, G06F 11/18

(54) **EINRICHTUNG ZUR INTERRUPTVERTEILUNG IN EINEM MEHRRECHNERSYSTEM**
DEVICE FOR INTERRUPT DISTRIBUTION IN A MULTI-COMPUTER SYSTEM
INSTALLATION POUR LA REPARTITION DES INTERRUPTIONS DANS UN SYSTEME A PLUSIEURS ORDINATEURS

(30) Priorität: 14.08.1990 EP 90115584
(43) Veröffentlichungstag der Anmeldung: 02.06.1993
(73) Patentinhaber: SIEMENS AKTIENGESELLSCHAFT, 80333 München (DE)
(72) Erfinder: GRONEMEYER, Michael, D-3302 Weddel (DE)
(86) Internationale Anmeldenummer: EP9101021
(87) Internationale Veröffentlichungsnummer: WO9203786

(56) Entgegenhaltungen:
- EP-A- 0 271 807
- DE-A- 3 431 169
- FR-A- 2 223 751
- IBM TECHNICAL DISCLOSURE BULLETIN, Bd. 15, Nr. 4, September 1972, NEW YORK, US, Seiten 1172-1173; E.J. Franklin: "Software Synchronization of Multiple Computers"

## Beschreibung

### Einrichtung zur Interruptverteilung in einem Mehrrechnersystem

Die Erfindung bezieht sich auf eine Einrichtung nach dem Oberbegriff des Patentanspruches 1.

Aus der Firmendruckschrift der Standard Elektrik Lorenz SELMIS, 1974.12822. Be ist ein dreikanaliges Rechnersystem bekannt mit einer sogenannten Unterbrechersteuerung, über die Interrupts zum Unterbrechen des jeweils laufenden Programms zeitgleich in die drei Einzelrechner des Rechnersystems eingegegeben werden. Bestimmte Interrupts werden nur dann akzeptiert, wenn sie der 2 von 3-Bedingung genügen, d. h. wenn mindestens zwei der drei Rechner entsprechende Steuersignale zur Programmunterbrechung geliefert haben. Abhängig von der Wertigkeit des jeweils anstehenden Interruptes wird die Interruptausgabe um vorgegebene Verzögerungszeiten verzögert, wenn tatsächlich nur zwei der drei Rechner entsprechende Steuersignale abgeben. Die Unterbrechersteuerung ist eine zentrale, allen Rechnern gemeinsame Baugruppe. Störungen im Funktionsverhalten der Unterbrecherbaugruppe wirken sich auf das gesamte Rechnersystem aus und beeinträchtigen sowohl die Sicherheit als auch die Zuverlässigkeit des Rechnersystems.

Aus der DE-OS 34 31 169 ist ein Verfahren zur Synchronisation mehrerer parallelarbeitender Rechner bekannt, bei dem die Rechner die Synchronisation ihrer Programmläufe über Interrupts besorgen. Hierzu stellt jeder Rechner beim Erreichen bestimmter Programmpunkte Interruptanforderungen an sich und seine Partnerrechner. Diese Interruptanforderungen führen dort nur dann zu einem Interrupt und damit zur Synchronisation der Programmläufe in den Rechnern, wenn sie der 2 von 3-Bedingung genügen.

Aus der Druckschrift FR-A-22 23 751 ist eine Einrichtung zur Synchronisierung dreier Rechner bekannt. Jeder der drei Rechner ( z. B. 1U ) wird in vorgegebenen Abständen durch Timersignale ( der ihm eigenen Uhr 6U ) beaufschlagt zur Erzeugung eines Impulses "Befehlsende (EOI)" am Ende der Ausführung eines jeden Befehls. Die drei von den drei Rechnern kommenden Impulse "Befehlsende" werden in jedem der drei Rechner einem Majoritätstor (z.B. 9U ) zugeführt, welches beim Erhalt von mindestens zwei solchen Impulsen einen Impuls " Beginn neuer Befehl ( SNI ) " abgibt, der in dem Rechner die Ausführung des nächsten Befehls einleitet.

Wie vom Prozeß initiierte Interrupts, also Meldungen und Kommandos, auf die Rechner verteilt und in die Datenverarbeitung der Rechner eingespeist werden, ist den vorgenannten Druckschriften nicht zu entnehmen. Insbesondere ist ihr nicht zu entnehmen, wie Fehler behandelt werden, die durch den laufenden Datenvergleich zwischen den Rechnern nicht erkannt werden .

Aufgabe der vorliegenden Anmeldung ist es, eine derartige Einrichtung anzugeben, die nach dem Ausfall eines Rechnerkanals beim Auftreten einer weiteren Störung innerhalb der Einrichtung eine sichere Abschaltung des Rechnersystems herbeiführt.

Die Erfindung löst diese Aufgabe durch die kennzeichnenden Merkmale des Patentanspruches 1. Durch die Verwendung dezentraler Baugruppen für die Interruptverteilung bleibt eine etwaige Störung auf denjenigen Rechnerkanal beschränkt, dem diese Baugruppe zugeordnet ist; durch die Verwendung von hardware-Majoritätsgliedern sind keine aufwendigen Synchronisationsvorgänge zwischen den Rechnern zur Interruptbehandlung erforderlich. Wenn nach dem Ausfall einer ersten Baugruppe oder eines ersten Rechnerkanals noch eine weitere Baugruppe ausfällt, bedeutet dies, daß über die Majoritätsglieder keine weiteren Interruptanforderungen mehr ausgegeben werden können, d.h. daß das Rechnersystem insgesamt funktionsunfähig geworden ist, weil es nicht mehr auf die Prozeßanforderungen reagiert. Dies wird durch den laufenden Datenvergleich zwischen den Rechnern aber nicht erkannt. Um den eingetretenen Fehler dennoch aufdecken zu können, benennt der Anspruch 1 gesonderte hardware-Maßnahmen, die den weiteren Ausfall erkennen und das Rechnersystem stillsetzen können.

Vorteilhafte Ausgestaltungen der Erfindung sind in den Unteransprüchen angegeben.

So benennt der Anspruch 2 die Maßnahmen, über die in vorteilhafter Weise die von den Rechnern stammenden Steuersignale zur Interruptanforderung in den Datenfluß der Rechner eingelesen und zeitgerecht den Majoritätsgliedern der einzelnen Baugruppen zugeführt werden. Veranlaßt wird dies gemäß Anspruch 3 durch bestimmte Steuersignale des Rechners.

Um unerwünschte Rückwirkungen zwischen den einzelnen Baugruppen zu vermeiden, sind die untereinander verbundenen Ein- und Ausgänge dieser Baugruppen gemäß Anspruch 4 zu entkoppeln.

Gemäß Anspruch 5 trennt sich ein als defekt erkannter Rechner ausgabeseitig vom Rechnersystem ab und verhindert damit seine weitere Einflußnahme auf das Rechnersystem.

Die Maßnahmen des Anspruches 6 beinhalten die bedarfsweise Maskierung einzelner Eingänge von ODER- und/oder Majoritätsgliedern. Hierdurch wird die Einflußnahme aus einem defekten Rechnerkanal oder einer defekten Baugruppe auf die Baugruppen der noch intakten Rechnerkanäle unterbunden.
Nach dem Merkmal des Anspruches 7 erfolgt die Maskierung durch UND-Glieder, die von den noch funktionsfähigen Rechnern bedarfsweise inaktiv geschaltet werden können.
Für die Wartung und Instandsetzung sind den Baugruppen gemäß Anspruch 8 Mittel zur optischen Kennzeichnung bestimmter Betriebszustände der Baugruppen-Bauelemente zugeordnet.

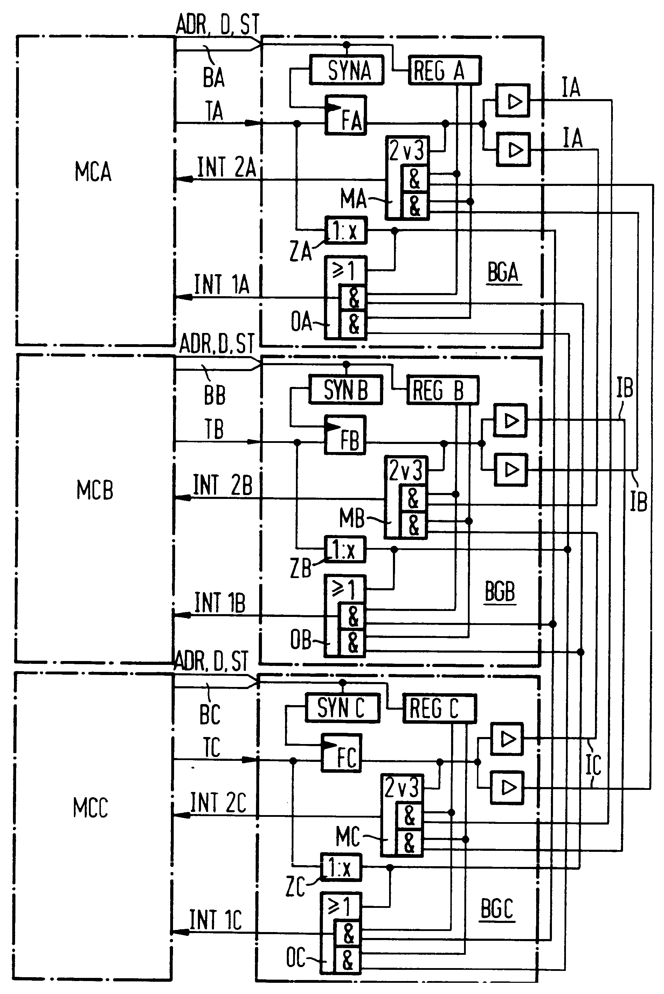

Ein Ausführungsbeispiel der Erfindung ist nachstehend anhand der Zeichnung näher erläutert.

Die Zeichnung zeigt ein aus drei Rechnern MCA, MCB und MCC bestehendes Mehrrechnersystem zur sicheren Steuerung eines beliebigen Prozeßgeschehens, z.B. zur Steuerung der Fahrwege einer Eisenbahnanlage. Die Rechner weisen gleiche Hardware auf und verarbeiten jeweils die gleichen Daten mit der gleichen Software. Hierzu werden die vom Prozeß kommenden Ereignisse dreikanalig in das Rechnersystem eingelesen und auf Übereinstimmung geprüft. Es findet ein laufender Vergleich der auf die einzelnen Rechnerbusse geschalteten Daten statt, wobei zur Fortführung des Prozesses jeweils mindestens zwei der Rechner übereinstimmende Daten bereitstellen müssen.

Für den laufenden Vergleich der auf die Rechnerbusse geschalteten Daten müssen sich die Rechner in kürzesten Zeitabständen gegenseitig synchronisieren. Eine derartige Sychronisierung ist auch erforderlich für die Datenausgabe (Kommandos) und für das Einlesen von Daten (Meldungen), damit sichergestellt ist, daß die Rechner stets den gleichen Datenbestand aufweisen. Zur Aktualisierung des Datenbestandes ist der Programmlauf der Rechner jeweils an der gleichen Stelle zu unterbrechen, um dann die aktuellen Daten, z.B. Frei- und Besetztmeldungen von Gleisabschnitten, einzulesen und dann das Programm in allen Kanälen an der gleichen Stelle fortführen zu können. Bisher werden diese Daten dadurch in die Rechner eingelesen, daß die Rechner in vorgegebenen Zeitabständen Interruptanforderungen zur Datenaktualisierung generieren. Die Einzelrechner stellen dabei durch Datenaustausch fest, ob mindestens jeweils zwei Rechner Interruptanforderungen gestellt haben und veranlassen dann über die Synchronisation den Gleichlauf ihrer Programme und das Unterbrechen ihrer Programme an der gleichen Stelle zur Datenaktualisierung. Durch Fehlverhalten eines Rechners veranlaßte Interruptanforderungen werden so vom Rechnersystem erkannt und unwirksam gemacht. Für den Softwarevergleich der Interruptanforderungen wird eine Zeitspanne von etwa einer Millisekunde benötigt. Für einen schnellen zyklischen Interrupt im Mikrosekundenbereich eignet sich die vorstehend erläuterte Softwareprüfung nicht, weil diese zu zeitaufwendig ist und bei den angenommenen Zeiten bereits eine Grundlast von bis zu 50 % der Rechnerverarbeitung beanspruchen würde.

Um den Zeitaufwand für die m von n-Bewertung bei der Interruptbearbeitung maßgeblich zu verkürzen, ist nach der Erfindung vorgesehen, diese Bewertung außerhalb der Rechner hardwaremäßig zu realisieren. Hierzu ist jedem Rechner des Mehrrechnersystems eine identisch aufgebaute Baugruppe BGA, BGB bzw. BGC zugeordnet, die über einen Bus BA, BB bzw. BC zur Übertragung von Adressen ADR, Daten D und Steuersignalen ST mit dem zugehörigen Rechner in Verbindung steht. Diese Baugruppen werden in vorgegebenen zeitlichen Abständen durch Timersignale TA, TB bzw. TC beaufschlagt. Die Timersignale werden z.B. aus den hochfrequenten Taktsignalen von Taktgebern abgeleitet, die den einzelnen Rechnern zugeordnet sein können. Die Ausgabe der Timersignale erfolgt über Teiler jeweils nach einer bestimmten Anzahl von zugeführten Taktsignalen. Die Timersignale werden in den Baugruppen umgesetzt in Interruptanforderungssignale. Ihre Folgefrequenz ist so zu wählen, daß eine genügend häufige Unterbrechung des Programmlaufes, beispielsweise im Abstand von zwei Millisekunden, gewährleistet ist. Die Timersignale werden in den Baugruppen zugeordneten Flip-Flops FA, FB, FC synchronisiert. Dies geschieht über Synchronisationsbaugruppen SYNA, SYNB, SYNC, deren Aufbau und Wirkungsweise für die Erläuterung der Erfindung nicht relevant ist und auf die deshalb hier nicht weiter eingegangen wird. Der Synchronisationsvorgang für die Interruptbearbeitung findet in jeweils zwei Schritten statt, von denen der erste die Übertragung der durch die Synchronisation aus den Timersignalen abgeleiteten Interruptanforderungssignale an nachgeschaltete Schaltmittel der Baugruppen und der zweite das Einlesen der von diesen Schaltmitteln ausgegebenen Interrupts in die Rechner beinhaltet. Hierzu führen die Synchronisationsbaugruppen den Steuereingängen der Flip-Flops ganz bestimmte Steuersignale zu, die jeweils vor dem Auslösen der Sychronisationssignale liegen, und das Einlesen der Interrupts in die Rechner erfolgt jeweils zu einem Zeitpunkt, an dem die Rechner synchron im gleichen Zustand verharren. Den einzelnen Flip-Flops nachgeschaltet sind Hardware-Majoritätsglieder MA, MB bzw. MC zur m von n-Bewertung der jeweils vorliegenden Interruptanforderungssignale. Jedes Majoritätsglied wird eingangsseitig beaufschlagt von dem Interruptanforderungssignal des zugehörigen Rechners und von den Interruptanforderungssignalen der übrigen am Rechnersystem beteiligten Rechner. Nur dann, wenn mindestens zwei der im Beispiel drei Rechner gleichzeitig eine Interruptanforderung ausgeben, schalten die Majoritätsglieder durch und veranlassen die zeitgleiche Ausgabe eines Interruptes INT2A, INT2B bzw. INT2C an den jeweils zugehörigen Rechner des Rechnersystems. Der Rechner, dem dieser Interrupt zugeführt wird, unterbricht das in ihm ablaufende Programm, liest den Interrupt ein und setzt seinen Programmlauf an der durch den Interrupt bezeichneten Stelle fort. Dadurch, daß die Rechner bei der Interruptbearbeitung keinen zeitaufwendigen Softwarevergleich mehr durchzuführen haben, durch den geprüft wird, ob tatsächlich mindestens zwei der drei Rechner Interruptanfoderungen gestellt haben, scndern lediglich die Unterbrechung ausführen, wenn zuvor durch die ihnen zugeordneten Majoritätsglieder festgestellt wurde, daß die 2 von 3-Bedingung eingehalten ist, ist eine nur sehr kurze Unterbrechung des Programmlaufs in der Größenordnung von einigen 10 µs erforderlich im Gegensatz zu einer Unterbrechung beim Softwarevergleich in der Größenordnung von einer Millisekunde. Wurden die Majoritätsglieder nach Beaufschlagung durch ein erstes Interruptanforderungssignal nicht innerhalb einer vorgegebenen Zeitspanne durch ein zweites Signal durchgeschaltet, wird die Interruptbearbeitung abgebrochen und ein Programm zur Fehleroffenbarung aufgerufen.

Die durch die Timersignale beaufschlagbaren Ausgänge der Baugruppen sind von den Eingängen der diese Signale aufnehmenden Majoritätsglieder in den anderen Baugruppen durch Ausgabeverstärker und Entkopplungswiderstände (nicht dargestellt) entkoppelt. Die Ausgabeverstärker lassen sich vom zugehörigen Rechner her bedarfsweise inaktiv schalten.

Fällt einer der drei Rechner des Rechnersystems aus, so arbeiten die verbleibenden Rechner im 2 von 2-Modes weiter. Der ausgefallene Rechner trennt sich selbst vom Rechnersystem ab bzw. das Rechnersystem wird von den ausfallfreien Rechnern abgeschaltet, wenn diese Rechner beim ständigen Datenvergleich die eingetretene Abweichung detektieren und der defekte Rechner sich nicht selbst abschaltet. Der Datenvergleich findet vorzugsweise in externen Vergleichern statt, um zu verhindern, daß für den Vergleichsvorgang selbst zu viel Rechnerzeit benötigt wird. Das Abschalten eines als defekt erkannten Rechners erfolgt dann über die externen Vergleicher, in denen die Informationen über die Datenabweichungen anfallen. Das Abschalten eines nicht mehr voll funktionsfähigen Rechners kann auch über das Prüfprogramm zur Fehleroffe nbarung geschehen.

Wenn das Dreirechnersystem nach dem Ausfallen eines Rechners als sicheres 2 von 2-Rechnersystem weiterbetrieben wird, muß jeder weitere Ausfall zum Abschalten des Rechnersystems führen, weil dieses dann nicht mehr als sicher anzusehen i st. Das Ausbleiben einer Interruptanforderung im verbliebenen 2 von 2-System ist über die durch Majoritatsglieder herbeigeführte Interruptverteilung jedoch nicht erkennbar. Vielmehr sperren die Majoritätsglieder beider Baugruppen wegen der dann fehlenden 2 von 2-Bedingung die Ausgabe von Interrupts an die zugehörigen Rechner und die Rechner selbst würden dann auf übereinstimmenden Programmschritten den Interruptbearbeitung weiterarbeiten. Der eingetretene Fehler ist über den Datenvergleich nicht erkennbar, muß jedoch zum Abschalten des Rechnersystemes führen, weil der Datenbestand des Rechnersystems nicht mehr aktualisiert wird. Um dies zu gewährleisten, beinhaltet jede gemäß der Erfindung ausgebildete Baugruppe einen beispielsweise als Zähler ausgebildeten Signalunterteiler ZA, ZB bzw. ZC, dem die vom zugehörigen Rechner ausgelösten Timersignale zugeführt werden und der an seinem Ausgang nach einer bestimmten Anzahl von Timersignalen ein Ausgangssignal abgibt. Dieses Ausgangssignal ist auf den einen Eingang eines zugeordneten ODER-Gliedes OA, OB bzw. OC geführt, dessen beide anderen Eingänge an die Signalunterteiler der den beiden anderen Rechnern zugeordneten Baugruppen angeschlossen ist. Über diese ODER-Glieder werden Interrupts INT1A, INT1B bzw. INT1C an die zugehörigen Rechner gegeben, sobald auch nur einer der Signalunterteiler ein Ausgangssignal abgibt. Dies ist von Interesse bei einem 2 von 2-System, bei dem einer der Rechner ausfällt bzw. dessen Interruptanforderung ausbleibt. In diesem Falle werden in größeren zeitlichen Abständen, die durch das Teilerverhältnis der Signalunterteiler gegeben sind, Interrupts an die angeschlossenen Rechner für die Initiierung von Prüfprogrammen zur Fehleroffenbarung gestellt. Die Rechner bzw. die diesen zugeordneten Vergleicher vergleichen dann u.a. die Zählerstände der Rechner und stellen wegen der unterschiedlichen Interruptanforderungen in den Zählern Ungleichheit fest, die zum Abschalten des Rechnersystems führt. Diese Prüfprogramme werden regelmäßig in größeren Zeitabständen durchgeführt, beispielsweise bei einem Signalunterteilerverhältnis von 1 zu 100 im Abstand von 200 Millisekunden und zwar selbstverständlich auch dann, wenn das 2 von 3-Rechnersystem insgesamt noch ordnungsgerecht arbeitet.

Um zu verhindern, daß nach dem Ausfall eines als defekt erkannten Rechners von diesem oder seiner Baugruppe Interruptanforderungen über die den anderen Rechnern zugeordneten Baugruppen an diese Rechner gelangen können, ist vorgesehen, die von den Ausgangssignalen des Signalunterteilers dieser Baugruppe oder den Interruptanforderungssignalen dieses Rechners beaufschlagbaren Eingänge der Majoritätsglieder und/oder ODER-Glieder in den Baugruppen der noch intakten Rechner bedarfsweise zu maskieren. Dies geschieht einmal über von den noch intakten Rechnern einstellbare Register REGA, REGB bzw. REGC, über die den Majoritätsgliedern und/oder den ODER-Gliedern vorgeschaltete UND-Glieder bedarfsweise inaktiv geschaltet werden und zum anderen in dem defekten Rechner über ein Rechnerabschaltsignal, mit dem die Ausgangssignale dieses Rechners hochohmig/inaktiv geschaltet werden. Die von der Baugruppe des jeweils als defekt erkannten Rechners stammenden Signale bzw. Anforderungen können dann nicht mehr zum Durchschalten der betreffenden Schaltglieder in den anderen Baugruppen führen und bleiben damit ohne Wirkung für das verbliebene Rechnersystem.

Die Maskierung einzelner Eingänge der Majoritäts- und ODER-Glieder ist auch von Vorteil bei der Instandsetzung eines Rechnersystems nach dem Ausfall eines Einzelrechners, weil durch die bedarfsweise inaktiv schaltbaren UND-Glieder beim Ziehen einer Baugruppe durch Störsignale auf den Zuleitungen zu den anderen Baugruppen keine ungewollten Interruptanforderungen ausgelöst werden können, die zum Abschalten des Rechnersystems insgesamt führen könnten.

Um ungewollte Wechselwirkungen zwischen den den einzelnen Rechnern zugeordneten Baugruppen auszuschließen, sind die die Interruptanforderungen abgebenden Baugruppen von den die Interruptanforderung aufnehmenden Baugruppen durch Ausgabeverstärker und Entkopplungswiderstände (nicht dargestellt) entkoppelt.

Die Baugruppen können in vorteilhafter Weise mit Mitteln zur optischen Kennzeichnung des Betriebszustandes mindestens einiger ihrer Bauelemente versehen sein. Dies erleichtert dem Wartungspersonal bei Instandsetzungsarbeiten die Fehlersuche und verkürzt damit die Ausfallzeit eines Rechners oder Rechnersystems.
Bei dem vorstehend beschriebenen Mehrrechnersystem besitzen die Einzelrechner gleiche hardware und sie werden mit der gleichen software betrieben. Die erfindungsgemäße Einrichtung ist aber auch anwendbar bei Mehrrechnersystemen, bei denen die Programme der Einzelrechner zur Lösung der gleichen Aufgabe nicht identisch, sondern voneinander verschieden sind, wenn sichergestellt ist, daß diese Programme zu gleichen Zwischenergebnissen führen und diese Zwischenergebnisse ausreichend häufig vorliegen, um einen Ergebnisvergleich in kurzen Abständen durchführen zu können. Auch hier ist ein Einlesen von Interruptanforderungen zur Aktualisierung von Meldungen und Kommandos in kurzen Zeitabständen erforderlich und auch hier läßt sich dies vorteilhaft unter Verwendung von hardware-Majoritätsgliedern und hardware-Schaltmitteln zum Einleiten von Fehleroffenbarungsmaßnahmen in größeren zeitlichen Abständen durchführen.

## Patentansprüche

1. Einrichtung zur Verteilung von Interrupts zum Aktualisieren von Meldungen und Kommandos auf die Einzelrechner eines sicheren Mehrrechnersystems mit n parallel arbeitenden Einzelrechnern,
bei der jedem der Einzelrechner (MCA, MCB, MCC) des Mehrrechnersystems eine in vorgegebenen zeitlichen Abständen durch Timersignale (TA, TB, TC) beaufschlagbare Baugruppe (BGA, BGB, BGC) zugeordnet ist zur Ausgabe von aus den Timersignalen abgeleiteten Interruptanforderungssignalen (IA, IB, IC),
und jede Baugruppe ein Hardware- Maj oritätsglied (MA, MB, MC) aufweist zur m von n-Bewertung der von der eigenen Baugruppe und der von den anderen Baugruppen veranlaßten Interruptanforderungssignalen und zur Ausgabe eines Interruptsignals (INT2A, INT2B, INT2C) an den zugehörigen Rechner bei Erfüllung der m von n-Bedingung,
**dadurch gekennzeichnet,**
daß jede Baugruppe einen Zähler (ZA, ZB, ZC) aufweist zur Ausgabe eines Ausgangssignales nach dem Zuführen einer vorgegebenen Zahl von Timersignalen der eigenen Baugruppe und
daß jede Baugruppe ferner ein ODER-Glied (OA, OB, OC) aufweist, dessen Eingänge an die Ausgänge des Zählers der eigenen und die der anderen Baugruppen angeschlossen sind und dessen Ausgang auf einen Interrupteingang des zugehörigen Rechners geführt ist zur Initiierung eines Prüfprogrammes mindestens zur Offenbarung unterschiedlicher Zählerstände der Zähler.

2. Einrichtung nach Anspruch 1, **dadurch gekennzeichnet,** daß die Timersignale (TA, TB, TC) auf jeder Baugruppe (BGA, BGB, BGC) einem Flip-Flop (FA, FB, FC) zum Einsynchronisieren der Interruptanforderungssignale (IA, IB, IC) in den Datenfluß des jeweiligen Rechners (MCA, MCB, MCC) zugeführt sind und daß der Synchronisationsvorgang in zwei Schritten erfolgt, von denen der erste die Übertragung der Interruptanforderungssignale an die Majoritätsglieder (MA, MB, MC) der eigenen Baugruppe und die der jeweiligen Nachbarrechner und der zweite das Einlesen der Interruptsignale (INT2A, INT2B, INT2C) in die Rechner beinhaltet.

3. Einrichtung nach Anspruch 2, **dadurch gekennzeichnet,** daß die Steuereingänge der Flip-Flops (FA, FB, FC) durch von dem jeweils zugehörigen Rechner (MCA, MCB, MCC) bereitgestellte, nicht zum Synchronisieren des Datenflusses verwendete Steuersignale beaufschlagt sind.

4. Einrichtung nach Anspruch 1, **dadurch gekennzeichnet,** daß die Ausgänge der die Interruptanforderungssignale (IA, IB, IC) abgebenden Baugruppen (BGA, BGB, BGC) von den Eingängen der die Interruptanforderungssignale aufnehmenden Baugruppen durch Signalverstärker und Entkopplungswiderstände entkoppelt sind.

5. Einrichtung nach Anspruch 4, **dadurch gekennzeichnet,** daß die Ausgänge der die Interruptanforderungssignale (IA, IB, IC) abgebenden Baugruppen (BGA, BGB, BGC) vom zugehörigen Rechner her beim Vorliegen eines Rechnerabschaltsignales inaktiv schaltbar sind.

6. Einrichtung nach Anspruch 1, **dadurch gekennzeichnet,** daß die von den Ausgangssignalen der Zähler (z.B. ZB, ZC) und/oder die von den Interruptanforderungssignalen (IB, IC) der jeweils anderen Baugruppen (BGB, BGC) beaufschlagbaren Eingänge des ODER- (OA) bzw. Majoritätsgliedes (MA) einer Baugruppe (BGA) vom zugehörigen Rechner (MCA) her maskierbar sind.

7. Einrichtung nach Anspruch 6, **dadurch gekennzeichnet,** daß den von den jeweils anderen Baugruppen (z.B. BGB, BGC) her beaufschlagbaren Eingänge des ODER- (OA) und/oder Majoritätsgliedes (MA) UND-Glieder vorgeschaltet sind, deren einer Eingang zur Übernahme des jeweils anliegenden Ausgangs- bzw. Interruptanforderungssignals (IA) vom Rechner (MCA) der zugehörigen Baugruppe (BGA) beaufschlagt ist, daß der Rechner das Ausfallen eines anderen Rechners (z.B. MCB) durch Datenvergleich detektiert und daraufhin dasjenige bzw. diejenigen UND-Glieder inaktiv schaltet, über das bzw. über die das Ausgangs- bzw. Interruptanforderungssignal (IB) an das betreffende UND- (UA) bzw. Majoritätsglied (OA) gelangt.

8. Einrichtung nach Anspruch 1, **dadurch gekennzeichnet,** daß die Baugruppen mit Mitteln zur optischen Kennzeichnung des Betriebszustandes mindestens einiger ihrer Bauelemente versehen sind.

## Claims

1. Device for the distribution of interrupts for updating messages and commands to the individual computers of a secure multi-computer system with n individual computers operating in parallel, in which a module (BGA, BGB, BGC) which can be triggered by timer signals (TA, TB, TC) at specified time intervals for the output of interrupt request signals (IA, IB, IC) derived from the timer signals, is assigned to each of the individual computers (MCA, MCB, MCC) of the multi-computer system, and each module has a hardware majority element (MA, MB, MC) for the m-from-n evaluation of the interrupt request signals generated by its own module and by the other modules and for the output of an interrupt signal (INT2A, INT2B, INT2C) to the associated computer on fulfilling the m-from-n condition, characterised in that each module has a counter (ZA, ZB, ZC) for generating an output signal after the injection of a specified number of timer signals from its own module, and that furthermore each module has an OR-gate (OA, OB, OC) whose inputs are connected to the counter outputs of its own modules and those of the other modules, and whose output is fed to an interrupt input of the associated computer for initiating a test program at least for indicating the different counter readings of the counters.

2. Device according to Claim 1, characterised in that the timer signals (TA, TB, TC) on each module (BGA, BGB, BGC) are fed to a flip-flop (FA, FB, FC) for synchronising the interrupt request signals (IA, IB, IC) in the data flow of the respective computer (MCA, MCB, MCC), and that the synchronization process takes place in two steps, the first of which is the transmission of the interrupt request signals to the majority elements (MA, MB, MC) of the local module and those of each of the neighbouring computers and the second being the reading of the interrupt signals (INT2A, INT2B, INT2C) into the computers.

3. Device according to Claim 2, characterised in that the control inputs of the flip-flops (FA, FB, FC) are triggered by control signals supplied by the respective associated computer (MCA, MCB, MCC) but not used for synchronising the data flow.

4. Device according to Claim 1, characterised in that the outputs of the modules (BGA, BGB, BGC) generating the interrupt request signals (IA, IB, IC) are decoupled from the inputs of the modules receiving the interrupt request signals by means of signal amplifiers and decoupling resistors.

5. Device according to Claim 4, characterised in that the outputs of the modules (BGA, BGB, BGC) generating the interrupt request signals (IA, IB, IC) can be made inoperative by the associated computer when a computer shutdown signal is present.

6. Device according to Claim 1, characterised in that the inputs of the OR-gate (OA) or the majority element (MA), respectively, of one module (BGA), triggered by the output signals of the counters (e.g. ZB, ZC) and/or those triggered by the interrupt request signals (IB, IC) of each of the other modules (BGB, BGC), can be masked by the associated computer (MCA).

7. Device according to Claim 6, characterised in that AND-gates, one of whose inputs is triggered by the computer (MCA) of the associated module (BGA) to accept the applied output signal or interrupt request signal (IA), are connected upstream of the inputs of the OR-gate (OA) and/or majority element (MA) triggered by each of the other modules (e.g. BGB, BGC), that the computer detects the failure of one of the other computers (e.g. MCB) by data comparison and subsequently makes the AND-gate or AND-gates inoperative via which the output signal or interrupt request signal (IB) reaches the relevant AND-gate (UA) or majority element (MA), respectively.

8. Device according to Claim 1, characterised in that the modules are provided with means for the visual identification of the operating state of at least some of their components.

## Revendications

1. Dispositif de répartition d'interruptions pour actualiser des messages et des ordres entre les ordinateurs d'un système de sécurité à ordinateurs multiples comportant n ordinateurs travaillant en parallèle, et dans lequel
à chacun des ordinateurs (MCA, MCB, MCC) du système à ordinateurs multiples est associé un module (BGA, BGB, BGC), qui peut recevoir à des intervalles de temps prescrits, des signaux (TA, TB, TC) d'horloge, pour fournir des signaux (IA, IB, IC) de demande d'interruption dérivés des signaux d'horloge, et
chaque module comporte un circuit (MA, MB, MC) majoritaire matériel, pour l'évaluation m-parmi-n des signaux de demande d'interruption, qui sont produits par le module proprement dit et des signaux de demande d'interruption, qui sont produits par les autres modules, et pour fournir un signal (INT2A, INT2B, INT2C) d'interruption à l'ordinateur associé, lorsque la condition m-parmi-n est satisfaite,
caractérisé en ce que
chaque module comporte un compteur (ZA, ZB, ZC) servant à fournir un signal de sortie après l'envoi d'un nombre prescrit de signaux d'horloge de ce module, et
chaque module comporte en outre un circuit OU (OA, OB, OC), dont les entrées sont connectées aux sorties du compteur de ce module et à celles des autres modules et dont la sortie est connectée à une entrée d'interruption de l'ordinateur associé, pour initialiser un programme de contrôle au moins pour l'indication de différents états de comptage des compteurs.

2. Dispositif selon la revendication 1, caractérisé en ce que les signaux (TA, TB, TC) d'horloge à chaque module (BGA, BGB, BGC) sont envoyés à une bascule (FA, FB, FC) bistable pour la synchronisation des signaux (IA, IB, IC) de demande d'interruption dans le flux de données de l'ordinateur respectif (MCA, MCB, MCC) et l'opération de synchronisation s'effectue en deux étapes, dont la première inclut la transmission de chacun des signaux de demande d'interruption aux circuits (MA, MB, MC) majoritaires de ce module et aux circuits majoritaires de chacun des ordinateurs voisins, tandis que la seconde étape inclut la mémorisation des signaux (INT2A, INT2B, INT2C) d'interruption dans les ordinateurs.

3. Dispositif suivant la revendication 2, caractérisé en ce que les entrées de commande des bascules (FA, FB, FC) bistables reçoivent des signaux de commande préparés par l'ordinateur (MCA, MCB, MCC) respectivement associé, qui ne sont pas utilisés pour la synchronisation du flux de données.

4. Dispositif suivant la revendication 1, caractérisé en ce que les sorties des modules (BGA, BGB, BGC), qui fournissent les signaux (IA, IB, IC) de demande d'interruption, sont découplées des entrées des modules, qui reçoivent les signaux de demande d'interruption, par des amplificateurs de signaux et des résistances de découplage.

5. Dispositif suivant la revendication 4, caractérisé en ce que les sorties des modules (BGA, BGB, BGC), qui fournissent les signaux (IA, IB, IC) de demande d'interruption, peuvent être commutées à l'état inactif, à partir de l'ordinateur associé, en présence d'un signal

6. Dispositif suivant la revendication 1, caractérisé en ce que les entrées, qui peuvent recevoir les signaux de sortie des compteurs (par exemple ZB, ZC) et/ou les entrées, qui peuvent recevoir les signaux de demande (IB, IC) d'interruption des autres modules (BGB, BGC) respectifs, du circuit OU (OA) ou du circuit (MA) majoritaire d'un module (BGA) peuvent être masquées à partir de l'ordinateur (MCA) associé.

7. Dispositif suivant la revendication 6, caractérisé en ce qu'en amont des entrées, qui peuvent recevoir à partir des autres modules respectifs (par exemple BGB, BGC), du circuit OU (OA) et/ou du circuit (MA) majoritaire, sont branchés des circuits ET, dont l'une des entrées est chargée, pour la prise en charge du signal de sortie et du signal (IA) de demande d'interruption respectivement appliqué, par l'ordinateur (MCA) du module (BGA) associé, l'ordinateur détecte la défaillance d'un autre ordinateur (par exemple MCB) par comparaison de données et rend ensuite inactifs celui ou ceux des circuits ET, par lequel ou lesquels le signal de sortie ou le signal (IB) de demande d'interruption parvient au circuit ET (UA) ou au circuit (OA) majoritaire considéré.

8. Dispositif suivant la revendication 1, caractérisé en ce que les modules sont munis de moyens pour caractériser optiquement l'état de fonctionnement au moins quelques-uns de leurs composants.
